# EUROPEAN PATENT APPLICATION

(11) **EP 2 022 666 A1**
(43) Date of publication of application: **11.02.2009**
(21) Application number: 07765848.2
(22) Date of filing: 04.05.2007
(51) Int. Cl.: B60N 2/46, B60N 2/235, B60N 2/08

(54) **CIRCULAR REGULATION SYSTEM**

(30) Priority: 09.05.2006 ES 200601213; 09.05.2006 ES 200601090 U
(71) Applicant: Canedo Pardo, Santiago, 08023 Barcelona (ES)
(72) Inventor: Canedo Pardo, Santiago, 08023 Barcelona (ES)
(74) Representative: Barlocci, Anna
(86) International application number: PCT/ES2007/000265
(87) International publication number: WO 2007/128854

(57) **Abstract**

Circular regulation system, which may be fixed in a discrete number of positions, **characterized in that** it comprises a train of three gears (1, 2 and 3) of identical modulus, with a fixed input gear (1), a transmission gear (2) that meshes with the input gear (1), and an output gear (3) that meshes with the transmission gear (2), the gears (1, 2 and 3) being mounted on a gear carrier (4), and said system comprising means for the displacement of at least one of the input (1) and output (3) gears between a system locking position, in which the input gear (1) and the output gear (3) are meshed with one another, and a system unlocking position, in which the input gear (1) and the output gear (3) do not mesh with one another.

## Description

### Field of the invention

The present invention relates to a regulation system that can be useful in several fields and specific applications, when an adjustable element is desired to be fixed in multiple different positions relative to a housing or to any fixed component.

The invention can be used, for example, as a regulation mechanism for comfort devices, such as adjustable armrests in motor vehicle seats. The invention further relates to an adjustable armrest using the regulation system of the invention.

### BACKGROUND ART

A large number of applications are known where flat mechanisms referred to as "articulated parallelograms" are employed consisting of a quadrilateral joined through flat links and with the opposite sides parallel, enabling translation in a bar with no loss of orientation in a circular path around one point. There exist several systems that allow the mechanism to be fixed. By simply removing one degree of freedom from any of the bars, whether it be by fixing the position of one of them, preventing one of the ball joints from being rotated, or by employing a fifth fixing bar that is not parallel to those forming the articulated parallelogram in whatever two points thereof.

For allowing the system to be capable of being locked in different positions a mechanism that allows the boundary condition to be actuated on a certain number of points is usually employed. In this regard, the patent documents may be mentioned: DE19924160; US4400984; EP1055552; GB2194305; DE19542198; US5722703; EP0018662.

### SUMMARY OF THE INVENTION

The circular regulation system according to the invention, as defined in appended claim 1, can be fixed in a discrete number of positions, and it is characterized in that it comprises a train of three gears having the same module with a fixed input gear, a transmission gear that meshes with the input gear, and an output gear that meshes with the transmission gear, the gears being mounted on a gear carrier and said system comprising means for displacing at least one of the input and output gears between a system locking position, in which the input gear and the output gear are meshed with one another, and a system unlocking position, in which the input gear and the output gear are not meshed with one another.

This new mechanism, formed with three gears and a gear carrier, allows imparting translation to a bar or movable element in a circular path, and further capable of being fixed to a certain number of positions relative to a housing or fixed component.

For this purpose, the system combines two principles already known from gear train mechanics:
a) Given a linear train of three gears having the same module; if the first one is fixed and the gear carrier is rotated the last one follows a circular translation path around the axis as well as a rotation on its own axis whose angular velocity and direction depend on the number of teeth both of the input and the output gears.
b) Given a linear train of at least three gears, if the first one and the last one are meshed, the system is locked and none of the gears can rotate.

Therefore, the regulation system is based in a three-gear arrangement guided by a gear carrier, in such a way that all the gears are meshed with one another, thereby making it possible for the system to become locked and with none of the gears being allowed to rotate.

For unlocking the mechanism, displacing means are provided allowing the input and output gears to be fully brought out of mesh. In this situation, if the input gear is fixed and the gear carrier is rotated, the output gear rotates around the axis of input gear, while undergoing rotation around its own axis.

The system can be locked again by meshing the input and output gears, in any position allowed by their teeth.

The application of the system has been developed for adjusting an armrest, and wherein the frame is secured to a chassis or seat in a vehicle, and the armrest element that can be fixed in a discrete number of positions relative to the frame, with the input gear being integral with the frame and the output gear being integral with the armrest, in such a way that the invention allows providing translation to the armrest in a circular path, and further capable of being fixed in many positions as desired by users.

Thus, the invention further refers to an armrest assembly according to claim 9.

According to a further aspect, the invention relates to an armrest assembly according to claim 12, using the same inventive concept.

### BRIEF DESCRIPTION OF THE DRAWINGS

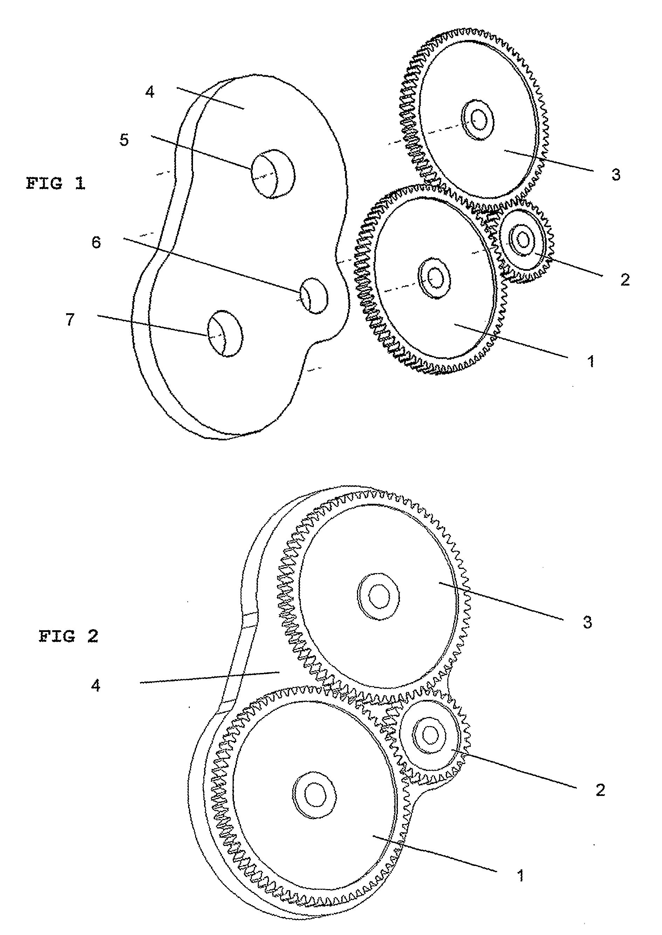

Figure 1 shows a perspective exploded view of the four pieces forming the regulation system of the invention.
Figure 2 shows a perspective view of the system assembled.
Figure 3 shows a plan view of the mechanism locked.
Figure 4 shows a plan view of the mechanism unlocked.
Figure 5 shows a plan view of the mechanism in a new position.
Figure 6 shows a plan view of the mechanism once locked in the new position.
Figure 7 shows an exploded view of an armrest with a regulation system according to one embodiment of the invention.
Figure 8 shows a perspective view of the armrest.
Figure 9 shows a side view of the armrest in its highest position exposing the gears all meshed with one another with the system remaining locked.
Figure 10 shows a side view of the armrest in its highest position exposing the gears after imparting a torque in a negative direction at the front portion of the armrest that makes the two gears having the same number of teeth to be brought out of mesh with the system remaining unlocked.
Figure 11 shows a side view of the armrest in an intermediate position exposing the gears after imparting a torque in a positive direction in the rear portion of the armrest that makes the armrest to be rotated without losing its orientation.
Figure 12 shows a side view of the armrest in an intermediate position exposing the gears all meshed with one another with the system remaining again locked after imparting a torque in a positive direction on the front portion of the armrest.
Figure 13 shows the geometry of the crank member in detail.
Figure 14 shows an exploded view of the armrest according to a further embodiment of the invention consisting of a fewer number of pieces.
Figure 15 shows a side view of the armrest according to a further embodiment of the invention consisting of a fewer number of parts in its highest position exposing the gears all meshed with one another with the system remaining locked according to further embodiment of the invention consisting of a fewer number of pieces.

### DETAILED DESCRIPTION OF A PARTICULAR EMBODIMENT

In view of the commented figures, one embodiment of the invention is shown in which the mechanism comprises a system of three gears (1, 2 and 3) having the same module and a gear carrier (4). The input gear (1) is fixed to the frame and has the same number of teeth that the output gear (3) which is secured to the bar or element to be adjusted, while the transmission gear (2) has a fewer number of teeth.

On its part, the gear carrier (4) has three bores (5, 6 and 7) in a triangular arrangement serving the purpose of guiding and allowing rotation of the three gears (1, 2 and 3). The centers of the bores (5, 6 and 7) are positioned in such a way that all of the gears can be meshed with one another: the input gear (1) with the transmission one (2); the transmission one (2) with the output one (3), and the output one (3) with the input one (1).

In order to allow unlocking the system, the shape of the bore (5) guiding the output gear (3) is slotted and circular centered on the axis of the bore (6) that guides the transmission gear (2) an angle sufficient to allow the input gear (1) and output gear (3) to be brought out of mesh. Alternately, it can be envisaged that the slotted circular bore is the one corresponding to the input gear (1).

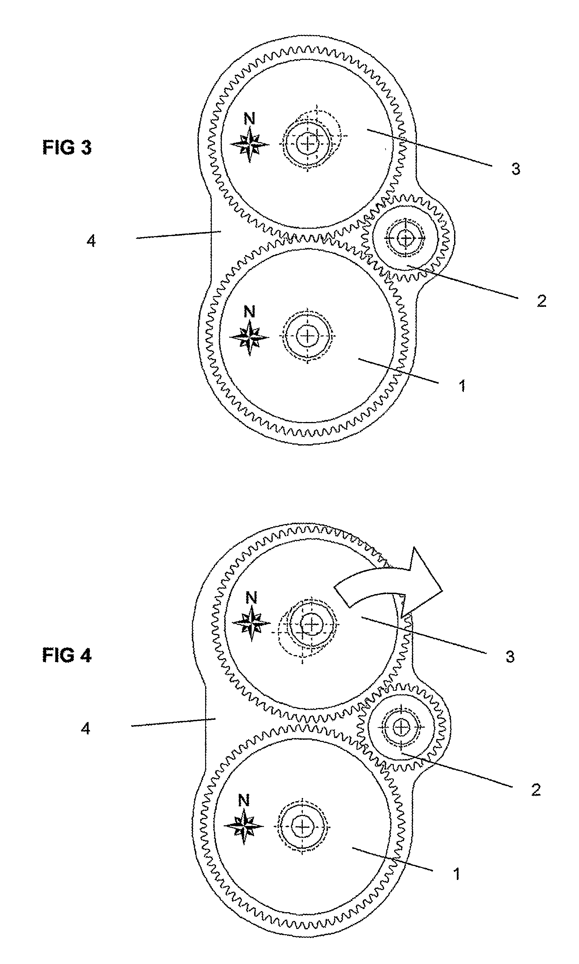

With the mechanism formed in this way, the succession of figs. 3, 4, 5 and 6, show the way it allows the output gear (3) to be moved around the center of the input gear (1) without losing orientation, and also becoming locked with the input gear (1) meshing with the output one gear (3) as their respective teeth match.

Unlocking of the system is shown in the succession of Figs. 3 and 4. When imparting on the output gear (3) a torque around the axis of the transmission gear (2) in the direction shown in Fig. 4 the output gear (3) rotates around the transmission gear (2) guided by the slotted bore (5) until reaching the limit position allowed by the same, in which situation the output gear (3) is fully brought out of mesh from the input gear (1).

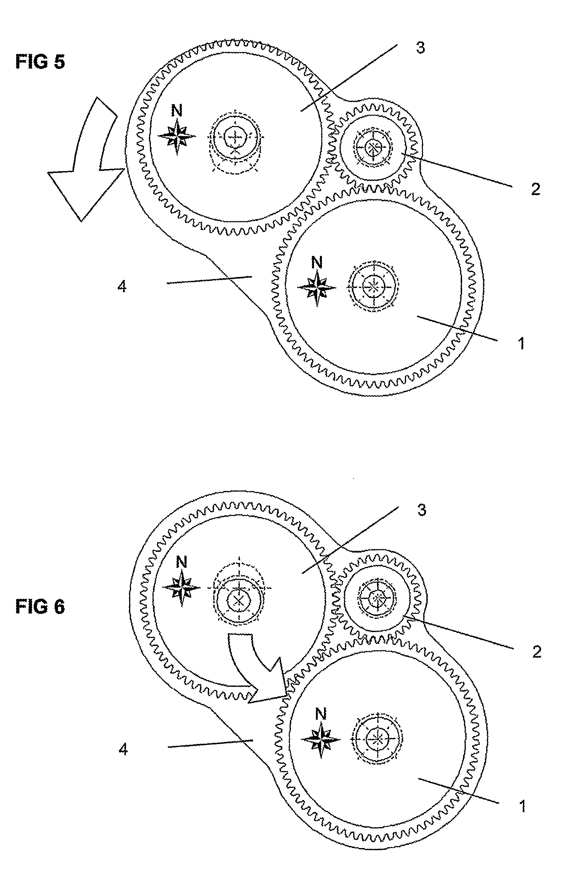

The unlocked system kinematics is shown in the succession of Figs. 4 and 5. Keeping the unlocked position, when a torque is imparted on the gear carrier (4) centered on the axis of the input gear (1) as shown in Fig. 5, the output gear (3) follows a translation in a circular path around the shaft of the input gear (1) without changing its orientation.

Locking of the system is shown in the succession of figs. 5 and 6. When imparting on the output gear (3) a torque around the axis of the transmission gear (2) in the direction shown in Fig. 6 the output gear (3) rotates around the transmission gear (2) guided by the slotted bore (5) until reaching the limit position allowed by the same, in which situation the output gear (3) is fully brought out of mesh from the input gear (1).

The system allows obtaining a controlled disorientation by varying the gear ratio in the input (1) and the output (3) gears such that as the gear carrier (4) is rotated the output gear (1) performs, in addition to a translation in a circular path centered on the axis of input gear (1), a change in the orientation around its own axis in either direction that is proportional to the fraction of the number of teeth in the input (1) and the output (3) gears.

Alternatively, locking and unlocking of the mechanism can be performed without displacing any of the gears, but including an auxiliary mechanism that prevents the relative rotation of any of the three gears (1, 2, or 3) with respect to the gear carrier (4) or by using a fourth gear meshing at the same time with the input gear (1) and the output gear (3).

The possibility of locking and unlocking of the system has been envisaged through an activatable auxiliary mechanism that allows the output gear (3) to be displaced within the limits of movement provided by the slotted bore (5).

The possibility of performing rotation of the system has been also envisaged by means of an auxiliary mechanism that imparts a torque perpendicular to the plane of the mechanism between the gear carrier and either of the gears (1, 2 and 3).

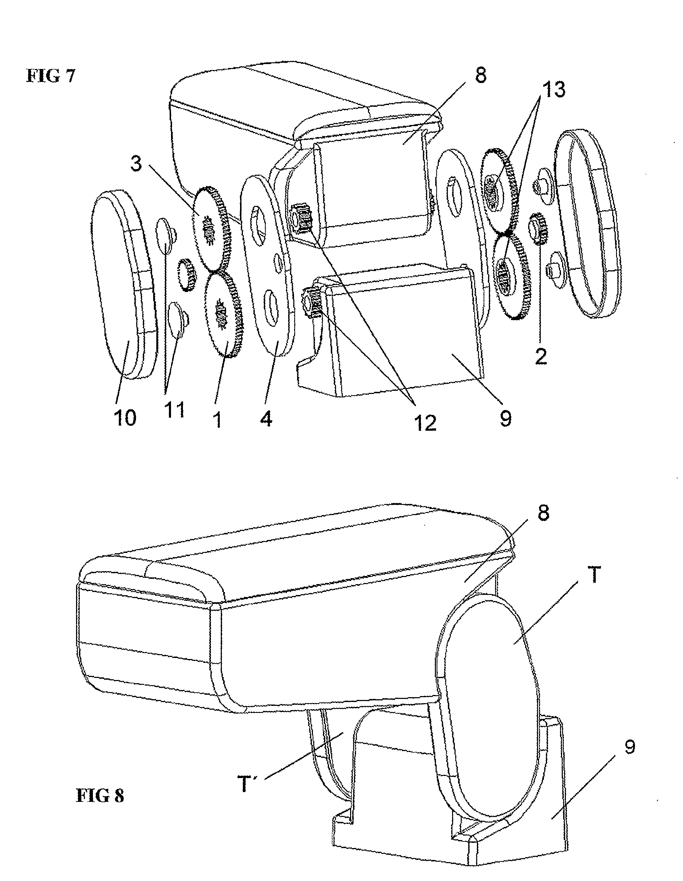

Figs. 7 and 8 show the arrangement and the assembly order of all the components forming an adjustable armrest assembly according to one embodiment of the invention. This essentially comprises two symmetrical trains of gears (T, T') that link an armrest (8) to a frame (9). Each train of gears consists of a crank (4) having three bores (5, 6 and 7) serving the purpose of guiding an input gear (1), an output gear (3) and a transmission minor gear (2), all of them with the same module.

In the embodiment shown the input (4) and output (3) major gears are provided with the same number of teeth.

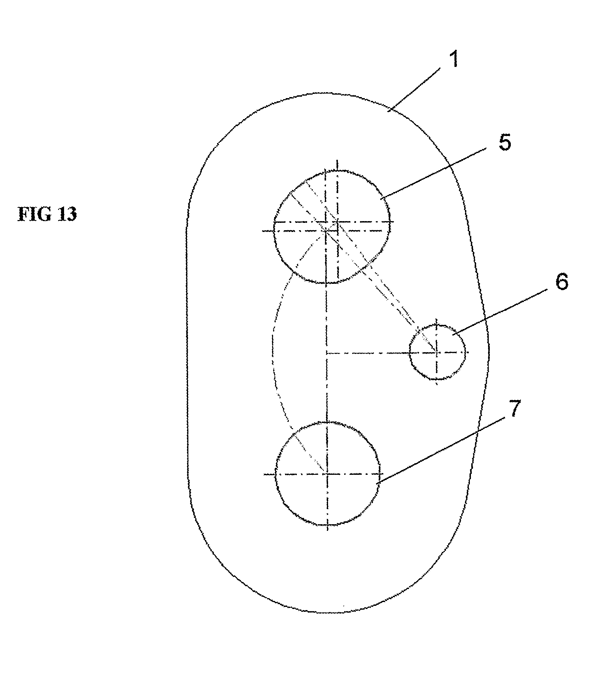

Fig. 13 shows the inner machining of the crank (4), consisting of three bores, two of which being larger in diameter intended for guiding major gears (1 and 3), with the feature that the upper one is slotted and circular in shape, centered on the axis of a third, smaller diameter bore intended for guiding minor gear (2).

Major gears (1 and 3) are internally ribbed for being fixed and provided with a neck matching the diameter of the bores formed in the crank (4). In every train of gears a major gear (3) extends through the circular slotted bore of the crank (4) and secured to the armrest (8) that is provided with an externally ribbed hollow projection equal to that formed inside the gear. Likewise, a further major gear (3) extends through the other larger diameter bore of the crank (4) secured to the frame (9) which is also provided with same externally ribbed hollow projection.

Respective irreversible caps (11) are press fitted on the externally ribbed hollow projection provided both in the armrest (8) and the frame (9) for preventing the major gears (1) from being disassembled.

The transmission gear (2), by being fitted to its corresponding bore in the crank (4), meshes with the two major gears (1 and 3) formed integrally with the frame (9) and the armrest (8) respectively.

Side cover (10) is attached to crank (4) by means of clamps so that the transmission gear (2) is retained and the train of gears protected.

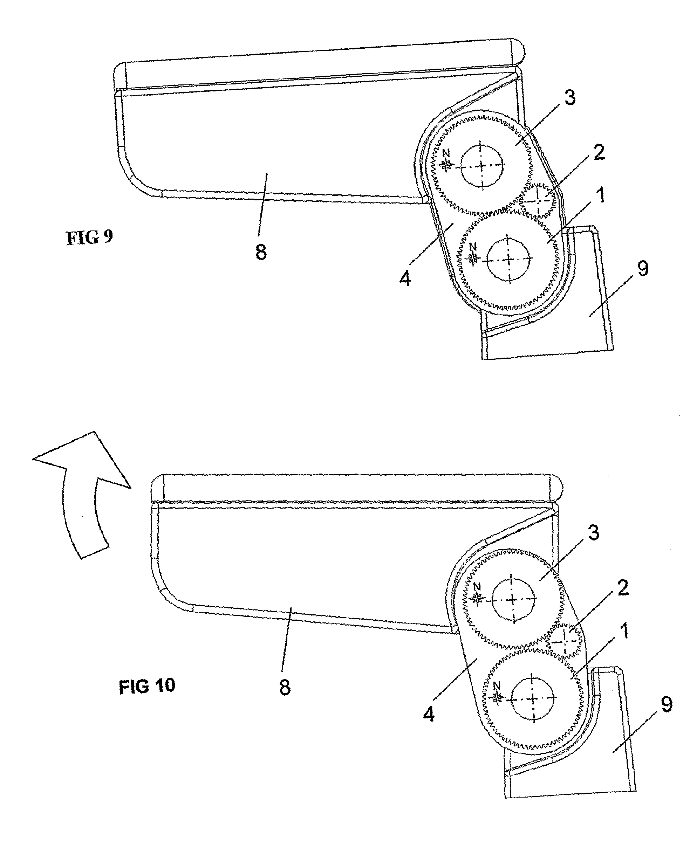

With the assembly formed in this way with both trains of gears assembled in the same way on each side, the mechanism allows the armrest position to be adjusted as shown in the above mentioned succession of figs. 9, 10, 11 and 12.

System unlocking is shown in the succession of figs. 9 and 10.

When imparting on the end of the armrest (8) a torque around the axis of the transmission gear (2) in the direction shown in Fig. 10 the output gear (3) rotates around the transmission gear (2) guided by the slotted bore (5) until reaching the limit position allowed by the same, in which situation the output gear (3) is fully brought out of mesh from the input gear (1).

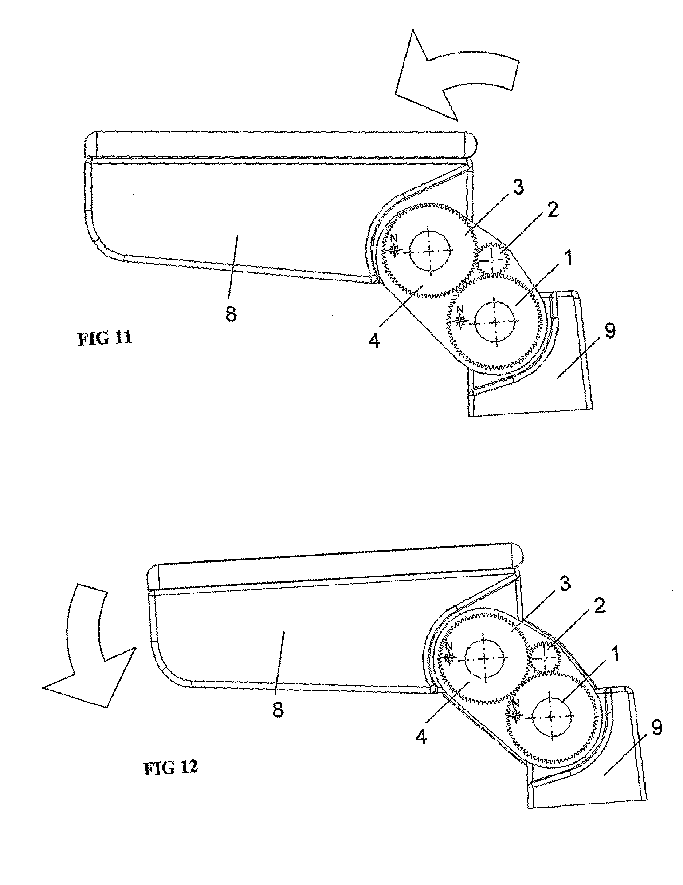

The unlocked system kinematics is shown in the succession of Figs. 10 and 11. Keeping the unlocked position, when a torque is imparted on the armrest (8) centered on the axis of the input gear (1) as shown in Fig. 11, the armrest (8) follows a translation in a circular path around the shaft of the input gear (1) without changing its orientation.

Locking of the system is shown in fig. 12. When imparting on the end of the armrest (8) a torque around the axis of the transmission gear (2) in the direction shown in Fig. 6 the output gear (3) rotates around the transmission gear (2) guided by the slotted bore (5) until reaching the limit position allowed by the same, in which situation the output gear (3) meshes with the input gear (1).

The system allows obtaining a controlled disorientation by varying the gear ratio in the input (1) and output (3) gears such that as the gear carrier (4) is rotated the armrest (8) performs, in addition to a translation in a circular path centered on the axis of input gear (1), a change in the orientation around its own axis in either direction around the axis of the output gear (3) that is proportional to the fraction of the number of teeth in the input (1) and the output (3) gears.

Alternatively, locking and unlocking of the mechanism can be performed without displacing any of the gears, but including an auxiliary mechanism that prevents the relative rotation of any of the three gears (1, 2, or 3) with respect to the gear carrier (4) or by using a fourth gear meshing at the same time with the input gear (1) and the output gear (3).

It has been also envisaged the possibility of actuating rotation of the system by means of an auxiliary mechanism that imparts a torque perpendicular to the plane of the mechanism between any of the gears (1, 2 and 3) and the gear carrier.

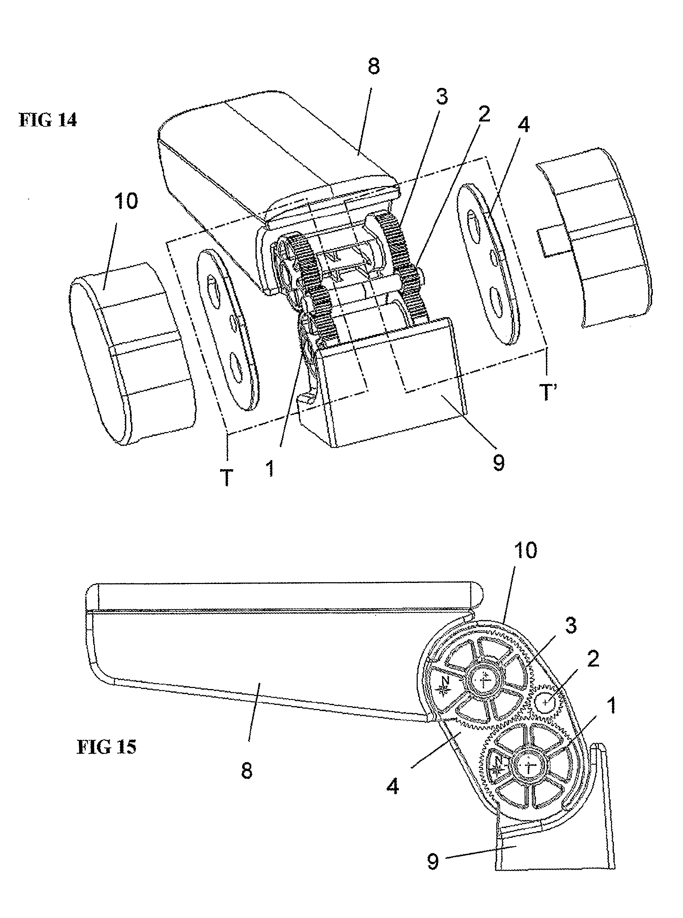

According to another embodiment the input (1) and output (3) gears are part of the frame (9) and the armrest (8) respectively, as shown in figs. 14 and 15. This embodiment makes it possible to reduce the number of parts and simplify assembly. In this case the minor gear (2) meshes with both trains of gears (T and T'). For performing assembly, the handle (4) is passed through the respective necks in the two major gears (1 and 3) and minor gear (2) and then the two sides covers (10) are sideways assembled and internally fitted, through an inner recess to cranks (4) and joined by clamps such that both cranks (4) are retained and the trains of gears (T and T') protected.

## Claims

1. Circular regulation system, that can be fixed in a discrete number of positions, **characterized in that** it comprises a train of three gears (1, 2 and 3) having the same module with a fixed input gear (1), a transmission gear (2) that meshes with the input gear (1), and an output gear (3) that meshes with the transmission gear (2), the gears (1, 2 and 3) being mounted on a gear carrier (4) and said system comprising means for the displacement of at least one of the input (1) and output (3) gears between a system locking position, in which the input gear (1) and the output gear (3) are meshed with one another, and a system unlocking position, in which the input gear (1) and the output gear (3) are brought out of mesh with each other.

2. Circular regulation system as claimed in claim 1, wherein the axes of said gears (1, 2 and 3) are mounted in corresponding bores (5, and 7) formed in the gear carrier (4) in a triangular arrangement, and wherein at least one of the bores (5) is circular and slotted in shape and form the means for the displacement of a gear between the locking position and the unlocking position of the system.

3. Circular regulation system as claimed in claim 2, wherein the slotted bore (5) is the one corresponding to the output gear (3).

4. Circular regulation system as claimed in claim 1, wherein it includes an activatable auxiliary mechanism for preventing relative rotation of any of the three gears (1, 2 or 3) with respect to the carrier gears (4).

5. Circular regulation system as claimed in any of the claims 1 to 4, wherein the input (1) and output (3) gears have the same number of teeth.

6. Circular regulation system as claimed in any of the claims 1 to 5, wherein the input (1) and output (3) gears have a different number of teeth.

7. Circular regulation system as claimed in any of the claims 1 to 3, wherein it includes an activatable auxiliary mechanism which acts on the gear guided by the slotted bore (5) making the input (1) and output (3) gears to be brought in and out of mesh.

8. Circular regulation system as claimed in any of the claims 1 to 7, wherein it includes comprises an activatable auxiliary mechanism that rotates any of the gears (1, 2 and 3) relative to the gear carrier (4).

9. Adjustable position armrest assembly which comprises a frame (9) intended to be secured to the chassis or the seats in a vehicle, and an armrest (8) that can be fixed in a discrete number of positions relative to the frame (9), **characterized in that** it comprises at least one regulation system as claimed in any of the claims 1 to 8, said gears forming a train of gears (T) in which the input gear (1) is integral with the frame (9) and the output gear (3) is integral with the armrest (8).

10. Armrest assembly as claimed in claim 9, wherein the frame (9) and the armrest (8) are provided with corresponding ribbed projections (12) for coupling complementarily shaped ribbed shafts (13) associated with the input (1) and output (3) gears.

11. Armrest assembly as claimed any of the claims 9 or 10, wherein it comprises an auxiliary mechanism that imparts a torque to either of the gears (1, 2 and 3) relative to the gear carrier (4).

12. Armrest assembly as claimed any of the claims 9 to 11, wherein it comprises two symmetrical trains of gears (T, T'), located at the two sides of the armrest (8).

13. Adjustable position armrest assembly, which comprises a frame (9) intended to be secured to the chassis or the seats in a vehicle, and an armrest (8) that can be fixed in a discrete number of positions relative to the frame (9), **characterized in that** it comprises at least one train of gears (T) with an input gear (1), a transmission gear (2) that meshes with the input gear (1), and an output gear (3) that meshes with the transmission gear (2), the input gear (1) being formed integrally with the frame (9) and the output gear (3) being formed integrally with the armrest (8), and means for switching between a locking position, in which the gears (1, 2, 3) can not rotate and the armrest (8) is fixed with respect to the frame (9), and an unlocking position, in which the gears (1, 2, 3) can rotate to one another and the position of the armrest (8) relative to the frame (9) can be adjusted.
